# EUROPEAN PATENT APPLICATION

(11) **EP 2 813 964 A1**
(43) Date of publication of application: **17.12.2014**
(21) Application number: 13305795.0
(22) Date of filing: 13.06.2013
(51) Int. Cl.: G06F 21/36, G06F 21/64

(54) **Method and system for converting cryptographic data into a familiar form**

(71) Applicant: Gemalto SA, 92190 Meudon (FR)
(72) Inventor: Faher, Mourad, 92190 Meudon (FR); Rouchouze, Bruno, 92190 Meudon (FR); Perticara, François, 92190 Meudon (FR); Guerassimo, Michael, 92190 Meudon (FR)
(74) Representative: Lotaut, Yacine Diaw

(57) **Abstract**

The present invention relates to a method wherein a computed integrity cryptographic data, such as a cryptographic hash, is displayed both on a user interface, such as a browser, as well as on the display of a user token, such as a smartcard or mobile phone. The cryptographic data is converted and displayed in graphical form, thereby allowing easy visual comparison of the data on the two displays. In case of a positive comparison, the user validates a transaction by sending a "matching" signal to the transaction sender or triggering an operation on the data. With the present invention, a user has the guarantee that a cryptographic data which is displayed prior to the execution of a transaction process corresponds to the cryptographic data that was actually generated. It thus guarantees that the user has perfect knowledge of his commitments formalized by the approval of the cryptographic data.

## Description

### TECHNICAL FIELD

The present invention generally relates to a method and system for converting cryptographic data into an intelligible user form.

The invention relates more particularly to the field of methods implemented so that a user has the guarantee that a cryptographic data which he displays prior to the execution of transaction process corresponds to the cryptographic data being actually generated. It is to guarantee that the user has a perfect knowledge of his commitments formalized by the approval of the cryptographic data.

### BACKGROUND ART

Every day hundreds of thousands of people interact electronically, whether it is through e-mail, e-commerce (business conducted over the Internet), ATM machines, or cellular phones. The perpetual increase of information transmitted electronically has led to an increased reliance on cryptography.

Whenever information is transmitted across an insecure network, there is the possibility that this may be intercepted and interfered with in some way. Therefore, many activities carried out using such a network to connect the parties involved in the activity require each party to confirm the identity of the other party(ies). This is particularly the case with activities conducted over the Internet.

One way of meeting the above requirement is to use secure data communications systems. Secure data communications systems allow to transfer information between a pair of correspondents. At least part of the information that is exchanged is enciphered by a predetermined mathematical operation by the sender. The recipient may then perform a complementary mathematical operation to decipher the information.

Encrypted data does not mean the data cannot be manipulated (e.g. repeated, deleted, or even altered). To rely on data, it is needed to know that it comes from an authorized source and is unchanged. Additional cryptographic operations are required for these purposes.

One known additional cryptographic operation is a cryptographic hash operation. The cryptographic hash operation produces a fixed-length output string (often called a digest) from a variable-length input string. The well known properties of cryptographic hash operation make hash operations useful for authentication purposes. For example, a copy of a digest can be kept for the purpose of comparing it with a newly generated digest at a later date. If the digests are identical, the data has not been altered.

Another known additional cryptographic operation is a MAC (Message Authentication Code) operation. A MAC operation uses a secret key and cipher algorithm to produce a value (the MAC) which later can be used to ensure the data has not been modified. Typically, a MAC is appended to the end of a transmitted message. The receiver of the message uses the same MAC key, and algorithm as the sender to reproduce the MAC. If the receiver's MAC matches the MAC sent with the message, the data has not been altered.

The MAC operation helps authenticate messages, but does not prevent unauthorized reading because the transmitted data remains as plaintext. You must use the MAC operation and then encrypt the entire message to ensure both data privacy and integrity.

Another known additional cryptographic operation is an HMAC (Hash MAC) operation. An HMAC operation uses a cryptographic hash function and a secret shared key to produce an authentication value. It is used in the same way a MAC is used.

Another known additional cryptographic operation is a sign operation. A sign operation produces an authentication value called a digital signature.

In neither of the available solutions, the holder of the device which performs additional cryptographic operation is sure that his commitment is used properly and that he approves on the transaction that he actually wishes to approve. For example, in case a customer enters an organization such as a bank and need to sign a document, the fact that he has a private key container (like smart card) for signature, or any other biometric means, he needs to be sure that what he sees is what he signs.

The basic problem in a transaction over a network like Internet, when the user has to approve (by for example signing) a digital form presented on his browser e.g. HTML form, the form is translated (hashed) by the middleware resulting in a cryptographic data (or a hash value) before to be signed. Nowadays, the user has few or no means to check whether this cryptographic data is tampered with before to be signed on his smartcard. Even if a secure messaging is established between the application running remotely or on local host, the cryptographic data is fundamentally still exposed to the risk of being modified by the very host who sends it to the user. Secure Messaging ensures integrity and confidentiality of the payload but does not prevent from changing the payload before encrypting it and delivering it to user's smartcard.

Moreover, displaying the cryptographic data on a user interface to make sure the user can check the cryptographic data before delivering his consent for the transaction is not convenient from user experience standpoint. Indeed, the common user is not assumed to check correctly and cautiously cryptographic data which are in hexadecimal strings over 20 bytes or 32 bytes. And in considering the experiences for instance in PKI, where when a user is warned about a dubious certificate and asked to decide whether to continue or cancel the transaction, the user generally validate anyway without further verification. This kind of reaction weakens significantly the security and reliability of transactions over internet even when relying on smartcard.

Therefore, it seems that a real need exists for a visual integrity check method for user convenience which is easy to implement at the device of the transaction sender as well as at the device of the user who should electronically approve the transaction. There exists also the need for visual integrity check method which offers to the user a guarantee that his commitment relates effectively to the elements which were displayed on his workstation before the validation transaction process was initiated. Moreover, there exists the need to have a visual integrity check method which can be implemented from a client device without any special additional hardware device.

### SUMMARY OF THE INVENTION

The present invention addresses the aforementioned drawbacks. The present invention relates to a method wherein a computed integrity cryptographic data is displayed in both the user interface (i.e. browser, embedded application onto the Browser, standalone application running on local host) and on the token interface (i.e. eDisplay-on-ICC or display-on-device (smartcard, Secure Element within a device, tablet, mobile, PDA, etc)). The cryptographic data is displayed in an ergonomic and intelligible form for the user so that the user can easily compare the two displayed cryptographic data. In case of a positive comparison, the user validates the transaction by sending a "matching" signal to the transaction sender or by triggering an operation on the verified data e.g. digital signature of any other computation. Therefore, with the present invention, the user can trust the environment (middleware) and the cryptographic data.

With the present invention, the cryptographic data which is in unfamiliar system is converted in an ergonomic and familiar system to the user. The result of such conversion allows the user to check whether this cryptographic data is tampered with before for example to be signed on his smartcard.

The method of the present invention has many technological advantages, among them: simplicity, content control, ergonomic design and full independence from the integrity check performed by devices.

It is yet another object of the invention to provide methods which minimize the amount of computation required to perform integrity check by devices.

Aspects of the embodiments of the present invention relate in general to a method for converting a cryptographic data during a transaction process through a user terminal, wherein
- computation of a cryptographic data from data to be verified,
- conversion of the cryptographic data into a familiar visual graphic representation,
- displaying the resulting graphic on the user's terminal interface.

In other various methods, during said transaction process a communication is established between the terminal and a user portable token during a commitment phase of the user. This communication can be a secure communication channel with a mutual authentication between the portable token and the terminal. The terminal transmits to the portable token the cryptographic data already computed or the data to be approved for computation. After conversion of the cryptographic data, the resulting graphic is displayed on the user's terminal interface and on the portable token display. If the visual comparison is positive, the transaction is validated by sending a matching signal or by triggering an operation.

In other various methods, the cryptographic data is the result of the computation of data to be approved by a cryptographic algorithm which prevent the retrieval of the initial data. The cryptographic algorithm can be a hash functions, a MAC operation, an HMAC operation or a sign operation.

In other various methods, during the conversion step, each value of the cryptographic data is converted into a coordinate point according to a predefined coordinate system.

When the coordinate system is a bi-dimension Cartesian coordinate system, each value of the cryptographic data is converted into a pair of coordinates (x, y), where y is a decimal value of said value of the cryptographic data, and x is a position of said value of the cryptographic data into the cryptographic data.

When the coordinate system is a three dimension Cartesian coordinate system, each value of the cryptographic data is converted into a three of coordinates (x, y, z), where y is a decimal value of said value of the cryptographic data, x is a position of said value of the cryptographic data into the cryptographic data and, z is randomly attributed.

In other various methods, each value of the cryptographic data is a binary value which is placed into an axis according to the position of said value into the cryptographic data, at each bit of the binary value is associated a colour value, the bit 0 is mapped to one colour and the bit 1 is mapped to another colour.

In other various methods, each value of the cryptographic data is converted into a pair of coordinates (r, θ) of a polar coordinate system, where the coordinate r is the position of said value into the cryptographic data, and the coordinate θ decimal value of said value of the cryptographic data.

In other various methods, graphic identifier element is added to the resulting graphic, graphic identifier element indicates a color, other graphical indicia, visual style, shading, highlighting, cross-hatching, underlining, font type, typefacing.

The present invention also relates to a terminal comprising means to perform the method of the present invention for converting a cryptographic data into a familiar visual graphic representation.

The present invention also relates to a portable token comprising means to perform the method of the present invention for converting a cryptographic data into a familiar visual graphic representation.

The present invention also relates to a system of converting cryptographic data into a familiar visual graphic representation during a commitment phase of a user of a transaction through a user terminal, said visual graphic representation being displayed on the terminal and a user portable token for visual validation by the user, according to the method of the present invention.

### BRIEF DESCRIPTION OF THE DRAWINGS

The following detailed description will be better understood with the drawings, in which:
FIG. 1 illustrates the different entities involved in a transaction process.
FIG. 2 is a logic flow diagram in accordance with an exemplary embodiment of this invention during a commitment phase of a transaction process.
FIG. 3a, 3b and 3c show schematic illustrations of the different results of the cryptographic conversion process with an exemplary embodiment of this invention.

### DETAILED DESCRIPTION OF THE EMBODIMENTS OF THE INVENTION

The present invention is not specific to any particular hardware or software implementation, and is at a conceptual level above specifics of implementation. It is to be understood that various other embodiments and variations of the invention may be produced without departing from the spirit or scope of the invention. The following is provided to assist in understanding the practical implementation of particular embodiments of the invention.

The same elements have been designated with the same referenced numerals in the different drawings. For clarity, only those elements and steps which are useful to the understanding of the present invention have been shown in the drawings and will be described.

Further, the mechanisms of data communication between the parties and their environment have not been detailed either, the present invention being here again compatible with usual mechanisms.

Furthermore, the connecting lines shown in the various figures contained herein are intended to represent exemplary functional relationships and/or physical couplings between the various elements. It should be noted that many alternative or additional functional relationships or physical connections may be present in a practical system.

Moreover, when an action is said to be performed by a terminal, it is in fact executed by a microprocessor in this terminal controlled by instruction codes recorded in a program memory on said terminal. An action is also ascribed to an application or software. This means that part of the instruction codes making up the application or software are executed by the microprocessor.

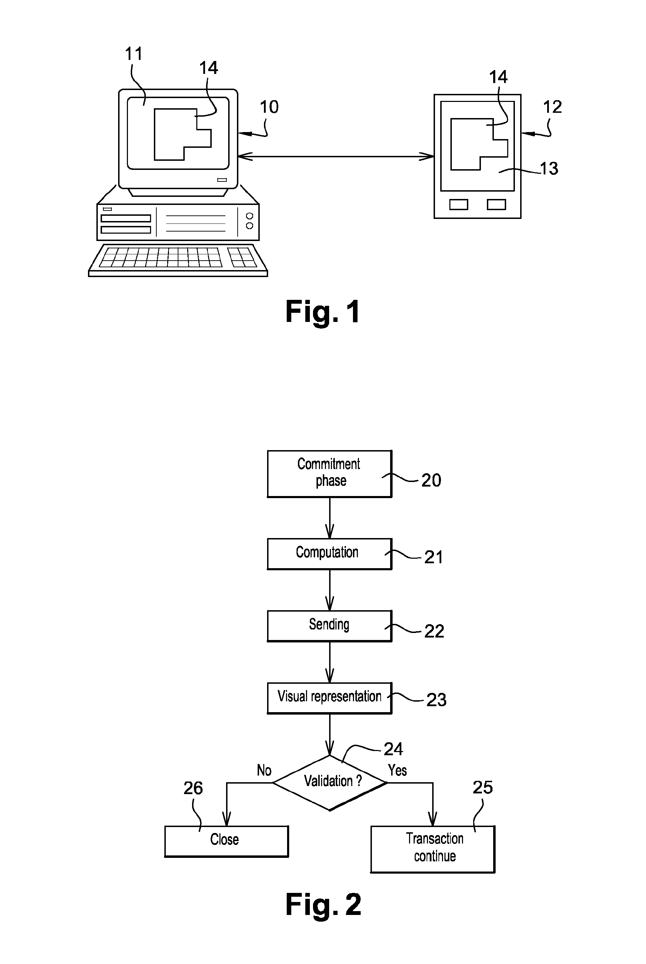

In the exemplary transaction process of FIG. 1, a terminal 10 comprising a display 11 is provided. In an example, the terminal 10 can be a bank or train station terminal, or a private device serves as terminal 10 and the private device screen as the display 11.

Furthermore, a personal token 12 is provided. The personal token 12 comprises a secure element and a display interface 13. The portable token 12 can be a display card, USB key, but could also be any kind of token comprising a display wherein the secure element is embedded, such as a mobile device. The token can also be a chip card reader/writer comprising a display wherein is introduced a chip card to establish communication between the reader/writer and the chip card.

As used herein, the term "device" encompasses, for example, desktop computers, laptop computers and mobile devices and other processor-equipped devices that may be developed in the future that may be configured to permit a user to interact with other devices over a network.

As used herein, a "mobile device" encompasses cellular telephones, personal data assistants (PDA), and smart telephones.

The term transaction is intended to broadly cover various actions which may be performed on an account, such as payment requests, order requests, share transfers, funds transfers, proof of identity requests, requests to release information, or a combination of these actions. Such actions may also be initiated in a variety of ways, for example, a payment request may originate from a credit card transaction at a physical store, a purchase on an ecommerce website (click-to-buy), or a remote payment system which uses a customer's mobile phone to pay for goods and services such as text-to-buy or talk-to-buy systems.

During a transaction process through the terminal 10, a commitment of the user is required for approval of said transaction. During the commitment phase, a connection is set up between the terminal 10 and the portable token 12. A graphic representation 14 of a cryptographic validation data 15 displayed both on the terminal 10 and on the token 12 is analyzed by the user to validate the transaction by confirming that the content of the transaction has not changed.

FIG. 2 is a logic flow diagram that illustrates the commitment phase of a method, and a result of execution of computer program instructions, in accordance with the exemplary embodiments of this invention. Therein, the process flow between the terminal 10 and the personal token 12 is depicted with labeled arrows to which respective Roman numbers are assigned. The flow is understood as being performed sequentially from top to bottom as indicated by the increasing Roman numerals. However, it should be noted that there may be multiple instances of this protocol run in parallel without specified ordering.

At step 20, a commitment phase of the process transaction is set up. During this commitment phase, the user has to take a decision as to whether or not to approve the content of the transaction (for example the price in question). During this phase, at step 21, the terminal 10 computes a cryptographic validation data 15 from data to be approved by the user. The data to be approved can be selected by the user trough the terminal 10 or predefined. The data to be approved can be the amount of the transaction, a user identification data or a set of arguments endorsed by a computation (e.g. digital signature, encipherment ...etc)

The cryptographic data 15 is computed by any algorithms which prevent the retrieval of the initial confidential information. This kind of algorithms is a one way function. In an embodiment, the cryptographic data 15 is computed by applying hashing functions or hashing algorithms (e.g., an MD5 or SHA hash...) to the data to be approved. A hashing algorithm will transform the data to be approved into a fixed length identifier string (often called a digest).

In another embodiment, the cryptographic data 15 is computed by applying a MAC (Message Authentication Code) operation, an HMAC (Hash MAC) operation or a sign operation. A sign operation produces an authentication value called a digital signature. Those various exemplary embodiments are well known by the person skilled in the art and do not need to be described anymore.

At step 22, the terminal 11 sends to the personal token 12 the computed cryptographic data 15. In a preferred embodiment, before any communication between the terminal 11 and the personal token 12 a mutual authentication is performed and a secure communication channel is established.

At step 23, the terminal 11 and the personal token convert the cryptographic validation data 15 into a visual graphic representation 14 easily interpretable for any user. An example of conversion is described herein after. The terminal 11 and the personal token 12 displays the result of the visual graphic representation 14.

At step 24, the user compares the two displayed visual graphic representation 14. If they are identical the content of the data has not been altered and the user validate at step 25, the transaction by for example clicking on an approval button. Instead, if the graphics are not similar, then the user rejects the transaction by for example clicking on the corresponding button and the transaction process flow will be closed, at step 26.

In another embodiment, the terminal 11 sends, at step 22, to the personal token 12 the data to be approved. The personal token computes the cryptographic validation data 15 from the data to be approved, with the same cryptographic 14 algorithm than the one used by the terminal. At step 23, the terminal 11 and the personal token convert the cryptographic validation data 15 into a visual graphic representation 14 easily interpretable for any user.

The method of the present invention provides a very simple means to ensure that the transaction is approved by the user.

The conversion method of the present invention is a software or application which is downloaded into the terminal 10 and the portable token 12. The software or application can be provided by a service provider. To download this software, the service provider can send a SMS including a downloading link of the software from a database of said provider. In another embodiment, the software can be downloaded directly through a link accessible from the website provider. By clicking on the download link, the user can install the software onto his terminal. In another embodiment, the software is integrated in the operating system that controls the execution of the instruction codes of the program memory. In another embodiment, the software of the invention is downloaded at the time of manufacture.

The conversion method of the present invention is performed according to one or more conversion/translation rules relating to processing the cryptographic data 15. The execution of the translation rules converts or translates (generally referred to herein as "conversion") the cryptographic data 15 into a predefined second format. Each value of the cryptographic data 15 is converted into a coordinate point according to a predefined coordinate system.

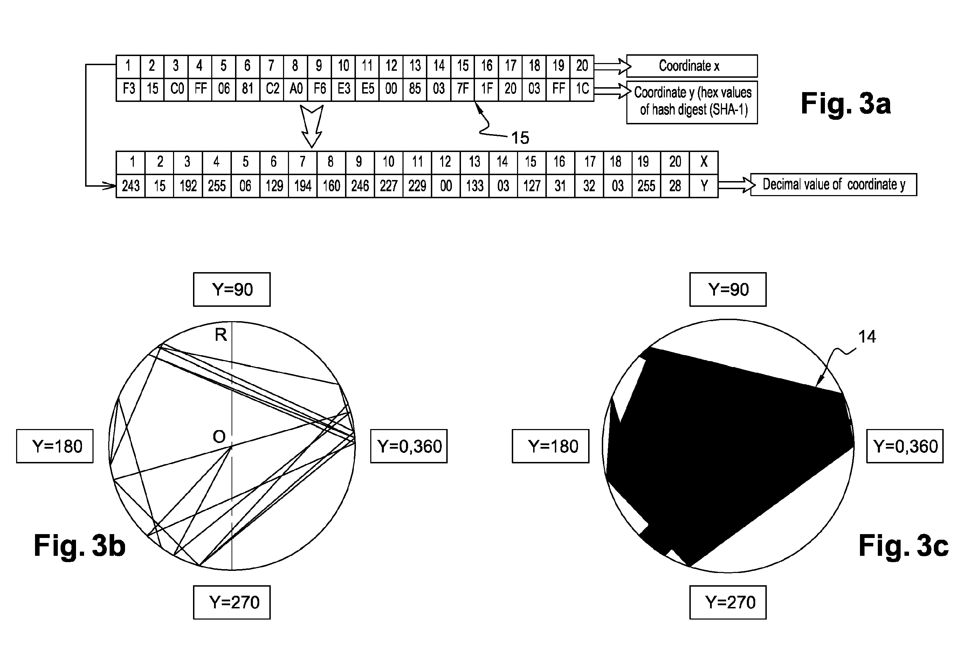

In an embodiment illustrated in FIG. 3a, the cryptographic data 15 are hexadecimal values. Each hexadecimal value is converted into a pair of coordinates (x, y) of a Cartesian coordinate system. The coordinate y can be the hexadecimal value and the coordinate x a position of said hexadecimal value into the cryptographic data 15. The hexadecimal value can be converted into a decimal. To specify the position of each converted hexadecimal value of the cryptographic data 15, the pair of coordinates (x,y) is represented on a graphic with x as x-coordinate (abscissa) and y as y-coordinate. The resulting graphic 14 is shown on the portable token display so that the user can compare it with the graphic that is processed in the same way and exposed on the user's terminal interface. If the graphics are not similar enough, the user can reject the transaction and not input, for example, his signature PIN code to trigger digital signature on the card.

In an embodiment, each hexadecimal value is converted into a three of coordinates (x, y, z) of a three dimension Cartesian coordinate system. The coordinate z can be predefined, for example attributed randomly at each hexadecimal value. In an example, the coordinate z corresponds to the position of a hexadecimal value into the cryptographic data 15.

In another embodiment, the hexadecimal value is converted in binary value. In this case, each converted hexadecimal value is placed into an axis according to the position of said value into the cryptographic data 15. At each bit of the binary value is associated a colour value. For example, pixels with a 0 can be referred to as black, and pixels with a 1 can be referred to as white. In general, the bits of the binary value can be interpreted by any two colours, 0 is mapped to one colour and 1 is mapped to another colour. The resulting image is shown on the portable token display and on the user interface of the terminal for comparison by the user.

In another embodiment, each hexadecimal value is converted into a pair of coordinates (r, θ) of a polar coordinate system. The coordinate r is predefined. For example, the coordinate r can correspond to a position of said hexadecimal value into the cryptographic data 15. The coordinate θ can be the converted hexadecimal value into decimal value. Each pair of coordinates (r, θ) is then represented on a plane and is determined by a distance r from the pole and an angle θ from the polar axis. The resulting graphic 14 is shown on the portable token display and on the user interface of the terminal for comparison by the user.

Other coordinates system can be used such as cylindrical and spherical coordinate systems and so on.

In the aim to enable the user easily identify that the data to be approved has been altered by making more ergonomic and familiar the resulting graphic, graphic identifier elements can be added. Graphic identifier element may indicate a color or other graphical indicia or visual style (e.g., shading, highlighting, cross-hatching, underlining, font type, type facing (italics, bold, etc.), etc.) associated with a particular rule.

An example is illustrated in FIG. 3a wherein the cryptographic data 15 is 20-byte length. Each byte starting from the most significant byte (MSB) is considered as a pair (position, value) where value is the byte decimal value and position is the byte offset in the chain or entire cryptographic data 15.

If the first byte of the cryptographic data is 0xF3, the corresponding pair will be (1, 243), if the second byte of the cryptographic data is 0x15, the corresponding pair will be (2, 15) and so on.

This pair (x, y) is represented in a circle of radius R and center C. Each coordinate y which corresponding to an angle in degrees is placed on the circle. The coordinates y are connected to each other successively according to their position in the cryptographic data 15 in other word according to the value of the coordinate x. in the example illustrated in FIG.3b, the point on the circle of the first byte is connected by a line to the point on the circle of the second byte which is connected by a line to a the point on the circle of the third byte and so on. The resulting graphic 14 is illustrated at FIG. 3b.

FIG. 3c illustrates an embodiment wherein graphic identifier element is added to the resulting graphic 14. In this embodiment, the internal area within outermost lines of the resulting graphic 14 is colored.

Furthermore, some of the features of the various non-limiting and exemplary embodiments of this invention may be used to advantage without the corresponding use of other features. As such, the foregoing description should be considered as merely illustrative of the principles, teachings and exemplary embodiments of this invention, and not in limitation thereof.

## Claims

1. A method for converting a cryptographic data during a transaction process through a user terminal, wherein
- computation of a cryptographic data from data to be verified,
- conversion of the cryptographic data into a familiar visual graphic representation,
- displaying the resulting graphic on the user's terminal interface.

2. The method according to the previous claim, wherein
- establishment of a communication between the terminal and a user portable token during a commitment phase of the user of said transaction process,
- displaying the resulting graphic on the user's terminal interface and on the portable token display,
- if the visual comparison is positive, the transaction is validated by sending a matching signal or by triggering an operation.

3. The method according to the previous claim, wherein the cryptographic data is the result of the computation of data to be verified by a cryptographic algorithm which prevent the retrieval of the initial data.

4. The method according to the previous claim, wherein the cryptographic algorithm is a hash functions, a MAC operation, an HMAC operation or a sign operation.

5. The method according to any previous claims, wherein the terminal sends to the portable token the cryptographic data already computed or the data to be verified for computation.

6. The method according to any previous claims, wherein during the conversion step, each value of the cryptographic data is converted into a coordinate point according to a predefined coordinate system.

7. The method according to the previous claim, wherein when the coordinate system is a bi-dimension Cartesian coordinate system, each value of the cryptographic data is converted into a pair of coordinates (x, y), where y is a decimal value of said value of the cryptographic data, and x is a position of said value of the cryptographic data into the cryptographic data.

8. The method according to the claim 6, wherein when the coordinate system is a three dimension Cartesian coordinate system, each value of the cryptographic data is converted into a three of coordinates (x, y, z), where y is a decimal value of said value of the cryptographic data, x is a position of said value of the cryptographic data into the cryptographic data and, z is randomly attributed.

9. The method according to the claim 6, wherein each value of the cryptographic data is a binary value which is placed into an axis according to the position of said value into the cryptographic data, at each bit of the binary value is associated a colour value, the bit 0 is mapped to one colour and the bit 1 is mapped to another colour.

10. The method according to the claim 6, wherein each value of the cryptographic data is converted into a pair of coordinates (r, θ) of a polar coordinate system, where the coordinate r is the position of said value into the cryptographic data, and the coordinate θ decimal value of said value of the cryptographic data.

11. The method according to any previous claims, wherein, graphic identifier element is added to the resulting graphic, graphic identifier element indicates a color, other graphical indicia, visual style, shading, highlighting, cross-hatching, underlining, font type, typefacing.

12. The method according to any previous claims, wherein the establishment of the communication comprises the following steps:
- mutual authentication between the portable token and the terminal, and
- establishment of a secure communication channel.

13. Terminal comprising means to perform the method for converting a cryptographic into a familiar visual graphic representation, according to any previous claims.

14. Portable token comprising means to perform the method for converting a cryptographic data into a familiar visual graphic representation, according to any previous claims 1 to 12.

15. System of converting cryptographic data, into a familiar visual graphic representation, during a commitment phase of a user of a transaction through a user terminal, said visual graphic representation being displayed on the terminal and a user portable token for visual validation by the user, according to any previous claims.
